# EUROPÄISCHE PATENTANMELDUNG

(11) **EP 4 066 935 A1**
(43) Veröffentlichungstag der Anmeldung: **05.10.2022**
(21) Anmeldenummer: 22166362.8
(22) Anmeldetag: 01.04.2022
(51) Int. Cl.: B01J 20/06, B01J 20/30, C01D 15/02, C01G 45/02

(54) **VERFAHREN ZUR HERSTELLUNG EINES LITHIUM-ADSORBENS**

(30) Priorität: 01.04.2021 DE 102021108442
(71) Anmelder: EnBW Energie Baden-Württemberg AG, 76131 Karlsruhe (DE)
(72) Erfinder: Kölbel, Thomas, 76228 Karlsruhe (DE); Kaymakci, Elif, 76337 Waldbronn (DE); Herrmann, Laura, 76227 Karlsruhe (DE); Graczyk-Zajac, Magdalena, 69126 Heidelberg (DE)
(74) Vertreter: DREISS Patentanwälte PartG mbB

(57) **Zusammenfassung**

Die vorliegende Erfindung betrifft ein Verfahren zur Herstellung des Lithium-Adsorbens H_{1.6}Mn_{1.6}O₄ umfassend die folgenden Schritte:
- a) Kalzinieren eines Zwischenprodukts LiMnO₂ in einer Luftatmosphäre, um die Vorläufer-Substanz Li_{1.6}Mn_{1.6}O₄ zu erhalten;
- b) Eluieren der Vorläufer-Substanz Li_{1.6}Mn_{1.6}O₄ durch Essigsäure, Natriumperoxodisulfat und/oder Ammoniumperoxodisulfat oder eine Mischung des obengenannten Eluenten / eine Lösung, die obengenannten Eluenten enthält und
- c) anschließendes Abtrennen, Waschen mit destilliertem Wasser und Trocknen, um das Lithium-Adsorbens H_{1.6}Mn_{1.6}O₄ zu erhalten.

## Beschreibung

Die vorliegende Erfindung betrifft ein Verfahren zur Herstellung eines Lithium-Adsorbens.

Aufgrund ihrer Vorzüge, wie z.B. einer hohen elektrischen Energiedichte, einer hohen Arbeitsspannung, einer langen zyklischen Lebensdauer, dem fehlenden Memory-Effekt usw., ist die wiederaufladbare Lithium-Ionen-Batterie (genauer gesagt: der Lithium-Ionen-Akkumulator) in Notebook-Computern, Mobiltelefonen und Elektroautos weit verbreitet. Die Nachfrage nach Lithium-Ionen-Batterien steigt unter anderem im Zuge der Elektromobilität stark an.

Darüber hinaus werden verschiedene Lithiumverbindungen z. B. in der Keramikindustrie, Glasindustrie, bei der Aluminium-Elektrolyse und bei der Herstellung von synthetischem Kautschuk eingesetzt.

Derzeit werden vor allem zwei verschiedene Rohstoffquellen zur Herstellung von Lithiumsalzen verwendet, nämlich Lithiumerze und Sole. Der Begriff "Sole" umfasst im Zusammenhang mit der Erfindung jede wässrige Lösung, die Lithium-Ionen enthält. Insbesondere fallen Grund- und Tiefenwasser sowie Meerwasser bzw. die "Abfallprodukte" von Meerwasserentsalzungsanlagen unter den Begriff "Sole" im Sinne der Erfindung.

Um aus einer Sole, die nur wenige Lithium Ionen enthält (typischerweise 10 bis 1000 mg/L) Lithiumsalze herstellen zu können, sollte deren Konzentration 15.000 ppm oder größer sein. Daher besteht ein Interesse an der Weiterentwicklung von Verfahren zur Erhöhung der Lithium-Ionen-Konzentration der Sole auf ein Niveau, das für die Herstellung von Lithiumsalzen erforderlich ist.

Aus der US 6 764 584 B2 und der nachveröffentlichten DE 10 2021 105 808.2 (Anmeldetag 10. März 2021) sind Adsorptionsverfahren bekannt, die es erlauben, aus einer lithiumhaltigen wässrigen Lösung (Sole) ein Eluent mit einer Lithiumkonzentration von etwa 1.500 ppm zu erreichen.

Diese vorbekannten Adsorptionsverfahren funktionieren sehr gut. Es wird das Adsorbens H_{1.6}Mn_{1.6}O₄ eingesetzt. Dieses Adsorbens wird bei der Desorption der Lithium-Ionen mit einem flüssigen Eluenten teilweise aufgelöst (sog. Dissolution) und steht dann für weitere Adsorptionen nicht mehr zur Verfügung. Aufgrund der Dissolution muss das Adsorbens in regelmäßigen Abständen ergänzt bzw. ersetzt werden. Die Kosten des Adsorbens haben einen erheblichen Einfluss auf die Wirtschaftlichkeit des Adsorptionsprozesses.

Aus der CN 103 272554 A ist ein Verfahren zur Herstellung eines Lithium-Adsorptionsmittels vom Lithiummanganoxidtyp (nachfolgend Adsorbens) bekannt. Dieses vorbekannte Verfahren umfasst die folgenden Schritte:
1) Hinzufügen einer Lithiumquelle und einer Manganquelle zu einer Wasserlösung, die einen Komplexbildner und ein Oxidationsmittel enthält und Rühren für 1 bis 72 Stunden bei einer konstanten Temperatur von 20 bis 120 °C, um ein Zwischenprodukt LiMnO₂ zu erhalten;
2) Kalzinieren des Zwischenprodukts LiMnO₂ in einer Luftatmosphäre für 1 bis 24 Stunden bei einer Temperatur von 300 bis 1000 °C, um einen Vorläufer Li_{1.6}Mn_{1.6}O₄ zu erhalten;
3) Eluieren des Vorläufers Li_{1.6}Mn_{1.6}O₄ durch eine anorganische Säure, nämlich Salzsäure (HCl), und
4) anschließendes Filtrieren, Waschen und Trocknen, um das Lithium-Adsorptionsmittel H_{1.6}Mn_{1.6}O₄ zu erhalten.

Dieses Herstellungsverfahren ist einfach und relativ kostengünstig.

Der Erfindung liegt die Aufgabe zugrunde, das aus der CN 103 272554 A bekannte Verfahren zur Herstellung eines Adsorbens weiter zu verbessern.

Diese Aufgabe wird erfindungsgemäß gelöst durch ein Verfahren zur Herstellung des Lithium-Adsorptionsmittel gemäß Anspruch 1.

Das erfindungsgemäße Verfahren weist Parallelen zu dem aus der CN 103 272554 A bekannten Verfahren auf. Allerdings wird erfindungsgemäß als Eluent der Vorläufersubstanz/des Vorläufers Li_{1.6}Mn_{1.6}O₄ im Verfahrensschritt 3) Essigsäure, Natrium Peroxodisulfat und/oder Ammonium Peroxodisulfat eingesetzt.

Der Einsatz der erfindungsgemäßen Eluenten zeigt eine deutlich geringere Freisetzung von Mangan relativ zu Salzsäure aus dem Adsorbens. Dadurch kann das Adsorbens, im Vergleich etwa zu Salzsäure, länger und in mehreren Zyklen eingesetzt werden. Gleichzeitig enthält das mit Essigsäure, Ammonium-peroxodisulfat und Natriumperoxodisulfat behandelte Adsorbens weniger Verunreinigungen und weist daher eine höhere Performance auf.

Diese Vorteile zusammen verbessern nicht nur die Produkt- und Prozessperformance im konkreten Einsatz, sondern bedeuten gleichzeitig einen geringeren Energieaufwand bei der Produktion des Adsorbens relativ zur Adsorptionsrate.

Entsprechendes gilt auch für den Verfahrensschritt gemäß Anspruch 2. Demnach wird das Zwischenprodukt Lithium Mangandioxid aus einem Mangan-Präkursor (= einer Substanz, die Mangan enthält) und einem Lithium-Präkursor (einer Substanz, die Lithium enthält) in einem Autoklav erzeugt.

Es hat sich als besonders vorteilhaft erwiesen, wenn die die hydrothermale Synthese in dem Autoklav unter Druck erfolgt, wobei der Druck in einem Bereich zwischen 10 bar und 200 bar liegt. Besonders bevorzugt ist ein Druckbereich von 20 bar bis 50 bar. Dadurch werden Leistung, Dauer und Effizienz der hydrothermalen Synthese weiter verbessert.

Die Vorläufersubstanz Di-Mangan-Tri-Oxid Mn₂O₃ wird aus Mangandioxid (MnO₂) durch Kalzinieren hergestellt. Das Kalzinieren der Vorläufersubstanz gemäß Anspruch 3 sollte bevorzugt bei einer Temperatur von etwa 650 °C erfolgen und etwa sechs Stunden andauern.

Anschließend findet die Hydrothermale Synthese statt. Aus dem Mangan-Präkursor (bevorzugt Mn₂O₃) und Lithium-Präkursor entsteht das Zwischenprodukt LiMnO₂ Die Hydrothermale Synthese findet bevorzugt bei 120°C für 24 h bei erhöhtem Druck statt. Das Zwischenprodukt Lithium Mangandioxid LiMnO₂ wird in oxidativer Umgebung kalziniert, wobei der Sorbens-Präkursor Li_{1.6}Mn_{1.6}O₄ entsteht. Bei umfangreichen Versuchen hat sich herausgestellt, dass das Kalzinieren des Zwischenprodukts Lithium Mangandioxid (Schritt A in Anspruch 1) in einem Temperaturbereich zwischen 350 °C bis 1000 °C, und besonders bevorzugt bei etwa 400 °C erfolgen sollte.

Bei einer Dauer der Kalzinierung zwischen einer und zwanzig Stunden, bevorzugt von vier Stunden, ergeben sich dabei sehr gute Resultate bei gleichzeitig relativ geringer Prozessdauer und einem vergleichsweise geringen Energieeinsatz.

Die hydrothermale Synthese des Zwischenprodukts Lithium Mangandioxid erfolgt bevorzugt bei einer Temperatur von etwa 100 bis 200 °C, vorzugsweise 120 °C, bei gleichzeitig gegenüber anderen Verfahren erheblich erhöhtem Druck und dauert etwa 24 Stunden. Auch hier haben sich diese Parameter als gut geeignet erwiesen; insbesondere im Hinblick auf eine gute Effizienz bei der Synthese bei gleichzeitig relativ geringem Energieeinsatz.

Das Kalzinieren der Vorläufersubstanz gemäß Anspruch 4 sollte bevorzugt bei einer Temperatur von etwa 650 °C erfolgen und etwa sechs Stunden andauern.

Weitere Vorteile und vorteilhafte Ausgestaltungen der Erfindung sind der nachfolgenden Zeichnung und deren Beschreibung entnehmbar. Alle in der Zeichnung, deren Beschreibung und den Patentansprüchen offenbarten Merkmale können sowohl einzeln als auch in beliebiger Kombination miteinander erfindungswesentlich sein.

### Zeichnung

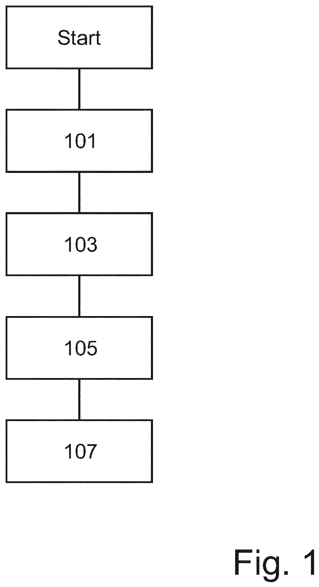

Die einzige Figur 1 stellt den Ablauf des erfindungsgemäßen Verfahrens zur Herstellung eines Absorbens als Blockdiagramm dar. Das Verfahren beginnt mit dem Ausgangsprodukt Mangandioxid MnO₂.In einem ersten Schritt (Block 101) wird dieses Ausgangsprodukt kalziniert, bevorzugt bei einer Temperatur von etwa 650°C und über eine Zeitspanne von etwa sechs Stunden. Die Kalzinierung führt dazu, dass eine Vorläufersubstanz Di-Mangan-Tri-Oxid Mn₂O₃ entsteht.

Diese Vorläufersubstanz wird zusammen mit Lithium-Präkursoren (bevorzugt) LiOH in einen Autoklav gebracht (Block 103). Dort wird das Lithium-Mangandioxid LiMnO₂ durch hydrothermale Synthese hergestellt. Als geeignete Prozessparameter haben sich eine Temperatur von etwa 120°C und eine Dauer von 24 Stunden erwiesen. Von Vorteil ist es auch, wenn die hydrothermale Synthese bei Drücken von 10 bar oder mehr erfolgt.

In einem weiteren Schritt (Block 105) wird dieses Lithium-Mangandioxid kalziniert, bevorzugt bei einer Temperatur von 400°C und einer Dauer von vier Stunden. Dabei entsteht die Vorläufersubstanz Li_{1,6}Mn_{1,6}O₄ des Adsorbens.

In einem darauffolgenden Schritt (Block 107) wird diese Vorläufersubstanz mit Essigsäure, Natrium Peroxodisulfat und/oder Ammonium Peroxodisulfat gewaschen.

Es ist auch möglich, diese Säuren nicht in reiner Form, sondern verdünnt mit einzusetzen. Es könnte auch die Mischung des Eluenten oder eine Lösung, die obengenannten Eluenten enthält, eingesetzt werden. Es haben sich folgende Mischungsverhältnisse als geeignet herausgestellt:
Bei der Verwendung von Essigsäure beträgt der Anteil der Essigsäure an der Lösung zwischen 0,1% und 100%.

Bei der Verwendung von Natrium Peroxodisulfat beträgt der Anteil bevorzugt zwischen 0,05% und 65% und bei der Verwendung von Ammonium Peroxodisulfat beträgt der Anteil zwischen 0,05% und 65%.

Anschließend wird die Flüssigkeit gefiltert, um das in Form einer körnigen Substanz vorliegende Adsorbens abzutrennen.

Dieses Adsorbens wird dann mit destilliertem Wasser gewaschen und anschließend getrocknet. Danach liegt das gewünschte Adsorbens H_{1,6}Mn_{1,6}O₄ vor und kann in einer Adsorptionskolonne zur Erhöhung der Konzentration bzw. zur Gewinnung von Lithium Ionen eingesetzt werden.

## Patentansprüche

1. Verfahren zur Herstellung des Lithium-Adsorbens H_{1.6}Mn_{1.6}O₄ umfassend die folgenden Schritte:
- a) Kalzinieren eines Zwischenprodukts LiMnO₂ in einer Luftatmosphäre, um die Vorläufer-Substanz Li_{1.6}Mn_{1.6}O₄ zu erhalten;
- b) Eluieren der Vorläufer-Substanz Li_{1.6}Mn_{1.6}O₄ durch Essigsäure (CH₃COOH), Natrium Peroxodisulfat (Na₂S₂O₈)) und/oder Ammonium Peroxodisulfat ((NH₄)₂S₂O₈) oder eine Mischung des obengenannten Eluenten / eine Lösung, die obengenannten Eluenten enthält und
- c) anschließendes Abtrennen, Waschen mit destilliertem Wasser und Trocknen, um das Lithium-Adsorbens H_{1.6}Mn_{1.6}O₄ zu erhalten.

2. Verfahren nach Anspruch 1, **dadurch gekennzeichnet, dass** das Zwischenprodukt LiMnO₂ aus einer Vorläufersubstanz Di-Mangan-Tri-Oxid (Mn₂O₃) und LiOH mittels einer hydrothermalen Synthese in einem Autoklav erzeugt wird.

3. Verfahren nach Anspruch 2, **dadurch gekennzeichnet, dass** die hydrothermale Synthese in dem Autoklav bei einem Druck erfolgt, wobei der Druck in einem Bereich zwischen 10 bar und 200 bar liegt.

4. Verfahren nach Anspruch 2 oder 3, **dadurch gekennzeichnet, dass** die Vorläufersubstanz Di-Mangan-Tri-Oxid (Mn₂O₃) aus Mangandioxid (MnO₂) durch Kalzinieren hergestellt wird.

5. Verfahren nach einem der vorhergehenden Ansprüche, **dadurch gekennzeichnet, dass** das Kalzinieren des Zwischenprodukts LiMnO₂ (Schritt a) in Anspruch 1) bei einer Temperatur von 350 °C bis 1000 °C, bevorzugt bei 400 °C erfolgt, und/oder dass die Kalzinierung 3 Stunden bis 5 Stunden, bevorzugt 4 h, beträgt.

6. Verfahren nach einem der Ansprüche 2 bis 4, **dadurch gekennzeichnet, dass** das Zwischenprodukt LiMnO₂ aus einer Vorläufersubstanz Di-Mangan-Tri-Oxid (Mn₂O₃) und LiOH bei erhöhtem Druck und/oder einer Temperatur von etwa 100 bis 200 °C, vorzugsweise bei 120 °C, erzeugt wird, und/oder dass die hydrothermale Synthese etwa 24 Stunden dauert.

7. Verfahren nach einem der Ansprüche 4 bis 6, **dadurch gekennzeichnet, dass** das Kalzinieren der Vorläufersubstanz Di-Mangan-Tri-Oxid (Mn₂O₃) bei einer Temperatur von etwa 650 °C erfolgt, und/oder sechs Stunden dauert.
